# EUROPÄISCHE PATENTSCHRIFT

(11) **EP 0 523 431 B1**
(45) Veröffentlichungstag und Bekanntmachung des Hinweises auf die Patenterteilung: **17.05.1995**
(21) Anmeldenummer: 92110905.4
(22) Anmeldetag: 27.06.1992
(51) Int. Cl.: B29C 55/16, D06C 3/02

(54) **Vorrichtung für eine Spannkluppenanordnung zur stufenlos veränderbaren Teilung**
Device for a tenter clip chain to infinitely vary the clip distance
Dispositif pour une chaîne de pinces, destinée à varier en continu la distance entre deux pinces

(30) Priorität: 18.07.1991 DE 4123840
(43) Veröffentlichungstag der Anmeldung: 20.01.1993
(73) Patentinhaber: LINDAUER DORNIER GESELLSCHAFT M.B.H, D-88131 Lindau (DE)
(72) Erfinder: Rutz, Andreas, Dr.-Ing., W-8990 Lindau/B. (DE)

(56) Entgegenhaltungen:
- EP-A- 0 013 046
- EP-A- 0 291 775
- GB-A- 2 238 013
- US-A- 3 932 919

## Beschreibung

Die Erfindung betrifft eine Spannkluppenanordnung mit stufenlos veränderbarer Teilung zur simultanen biaxialen Behandlung von Folienbahnen mit an beiden Rändern einer Folienbahn angreifenden Klemmteilen, die an mit Gelenkbolzen ausgerüsteten Kluppenkörpern angeordnet sind und wobei jeder Kluppenkörper über mehrere von ihm getragene Rollenanordnungen zur vertikalen und horizontalen Führung an Laufflächen von Führungsschienen abrollt und die Kluppenkörper paarweise zur stufenlosen Teilungsänderung mit einem mit einer Steuerschiene in Kontakt kommenden Verstellmechanismus verbunden sind.

Nach dem DE-Patent 37 16 603 ist eine Vorrichtung zur simultanen biaxialen Behandlung von Folienbahnen bekannt. Spannkluppen sind hierbei durch Kettenstränge miteinander verbunden. Die Verbindung zweier Spannkluppen erfolgt über lose Kettenglieder, wobei ein entsprechendes Steuermittel zur Abstands- und damit Teilungsveränderung auf einen Gelenkbolzen einwirkt. Eines der lose verbundenen Kettenglieder ist als Winkelhebel ausgebildet, der an seinem über dem Gelenkbolzen überstehenden freien Arm eine Führungsrolle trägt, welche im Zusammenwirken mit einer Steuerschiene die gestreckte Anordnung der Kettenglieder in eine abgewinkelte Anordnung drückt und umgekehrt. Damit kann mittels dieser Anordnung der Abstand in Längsrichtung zwischen zwei aufeinanderfolgenden Spannkluppen verändert werden.

Hierbei wird als nachteilig erkannt, daß dio einzelnen Spannkluppen über wenigstens ein, vorzugsweise zwei, d.h. ein unterhalb und ein oberhalb des Kluppenkörpers angreifendes Kettenglied verfügen müssen und damit eine Mehrzahl von Gelenkstellen aufweist, die erheblichen Verschleiß unterworfen sind.

Aufgabe der Erfindung ist es daher, eine Vorrichtung zur stufenlosen Veränderung der Teilung in Spannkluppenanordnungen zur simultanen biaxialen Behandlung von Folienbahnen zu schaffen, die auf die bisher übliche Kettenlaschenverbindung zwischen den zu einer Kluppenkette zusammengefügten Einzelspannkluppen verzichtet und die ferner zum Zwecke einer gesteuerten Längsschrumpfung eine aufwendige Hebel- und Gelenkanordnung zur Beinflussung des Abstandes (Teilung) zwischen zwei aufeinanderfolgenden Spannkluppen vermeidet. Ferner besteht die Aufgabe darin, eine der Vorrichtung angepaßte Steuerschiene zu schaffen, die ein exakt gesteuertes und reproduzierbares Längsschrumpfen der Folienbahn ermöglicht.

Zur Lösung der gestellten Aufgabe sind die Merkmale der Ansprüche 1 und 5 vorgesehen.
Vorteilhafte Ausgestaltungen der Erfindung ergeben sich aus den Unteransprüchen und der Beschreibung.

Durch die erfindungsgemäße Lösung wird anstelle der Kettenlaschen und des als Steuerorgan ausgebildeten Winkelhebels eine feinfühlige Teilungsveränderung innerhalb der Kluppenanordnung erreicht.

Ein Ausführungsbeispiel der Erfindung sei nachstehend anhand der Zeichnung näher erläutert. Es zeigt
- Fig. 1:: einen vollständig dargestellten Rollenkörper einer Spannkluppe, der mit einem teilweise dargestellten Rollenkörper durch den Verstellmechanismus verbunden ist, nach Ansicht "A" in Fig. 2,
- Fig. 2:: eine Schnittdarstellung nach Linie B-B gem. Fig. 1,
- Fig. 3:: eine Schnittdarstellung nach Linie C-C gem. Fig. 2,
- Fig. 4:: die mit dem Verstellmechanismus zusammenwirkende Steuerschiene in der Vorderansicht,

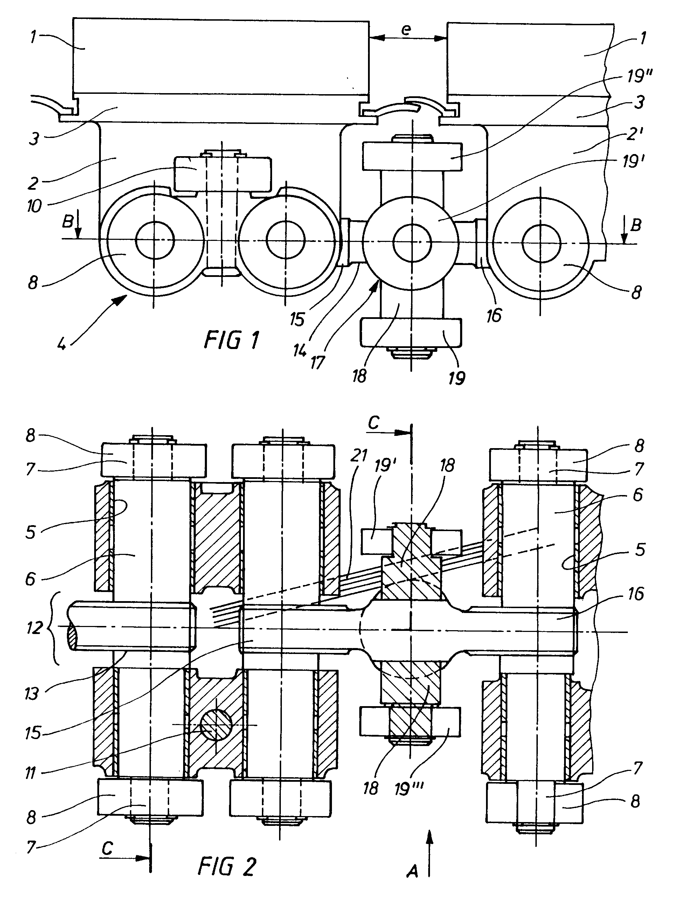

Von der Spannkluppenanordnung ist in Fig. 1 nur der die Spanneinheit 1 aufnehmende Teil, als Rollenkörper 2 bezeichnet, dargestellt.
Die nicht im einzelnen dargestellte Spanneinheit 1 wird von dem Rollenkörper 2 über eine Verbindungsplatte 3 aufgenommen, die Bestandteil des Rollenkörpers 2 ist. Der Rollenkörper 2 ist mit im Bereich seiner der Verbindungsplatte 3 gegenüberliegenden äußeren Begrenzung 4 mit Durchgangsbohrungen ausgerüstet. Jede der einander fluchtend gegenüberliegenden Durchgangsbohrungen nimmt eine Lagerbuchse 5 auf. In den beiden Lagerbuchsen 5 ist ein gemeinsamer Gelenkbolzen 6 drehbeweglich gelagert. An den oberen und unteren freien Enden weist der Gelenkbolzen 6 einen Zapfen 7 zur Aufnahme einer Führungsrolle 8 auf. Jede der Führungsrollen 8 ist drehbeweglich auf jedem der Zapfen 7 gelagert und zwischen Führungsbahnen 9 oder Bändern in horizontaler Ebene geführt. Eine weitere Rolle 10, die als Tragrolle für jeden Kluppenkörper dient, ist im unteren Teil des Rollenkörpers 2 auf dem freien Ende einer querliegenden Achse 11 drehbeweglich angeordnet. Diese Rolle 10 nimmt das Gewicht des aus Rollenkörper 2 und Spanneinheit 1 bestehenden Kluppenkörpers auf, indem sie sich abstützend auf der Schmalseite einer der Führungsbahnen 9 abrollt.
Jeder der Gelenkbolzen 6 weist im Bereich des zwischen dem oberen und unteren Teil des Rollenkörpers 2 liegenden Gelenkbolzen-Abschnittes 12 eine querliegende Gewindebohrung 13 mit relativ geringer Gewindesteigung auf. Wichtig ist dabei, daß der eine Gelenkbolzen des Rollenkörpers 2,2' mit einem Rechts- und der andere Gelenkbolzen mit einem Linksgewinde ausgestattet ist.
Zwischen den Rollenkörpern 2,2' ist eine einen Verstellmechanismus bildende Gewindespindel 14 mit einem Rechtsgewinde versehender Spindelabschnitt 15 und einen mit Linksgewinde versehender Abschnitt 16 vorgesehen, wobei die Gewindespindel 14 zentrisch, d.h. zwischen den Spindelabschnitten 15,16 ein Kreuzstück 17 aufweist, dessen Arme 18 mit radial um die Längsachse der Gewindespindel 14, in einem Drehwinkel versetzt angeordneten Steuerrollen 19,19',19'',19''' ausgerüstet sind. Jeder der Spindelabschnitte 15,16 der Gewindespindel 14 steht mit der Gewindebohrung 13, die den jeweiligen Spindelabschnitt gegenüberliegend in Gelenkbolzen 6 vorgesehen ist, in Eingriff.

Es liegt auch im Rahmen der Erfindung, daß die Gelenkbolzen 6 anstelle der Gewindebohrung 13 einen mit diesen fest verbundenen einander diametral gegenüberliegend angeordneten Gewindebolzen aufweisen, deren freie Enden mit einer zentral mit Rechts- und Linksgewinde versehenen Verstellmutter in Eingriff stehen. Die zentrale Verstellmutter entspricht dabei dem Kreuzstück.

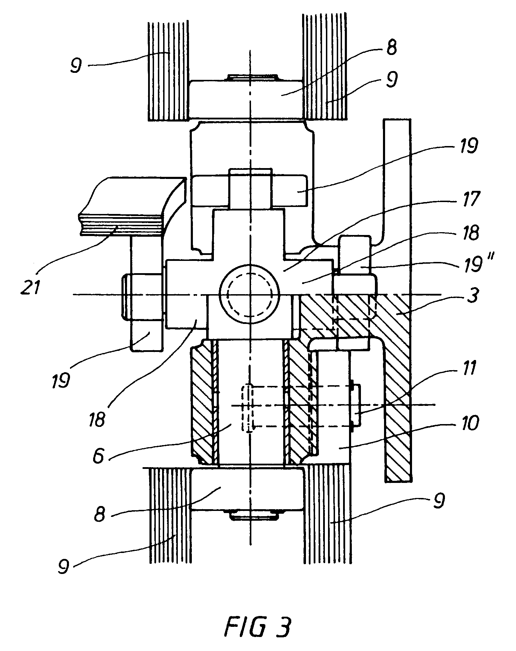

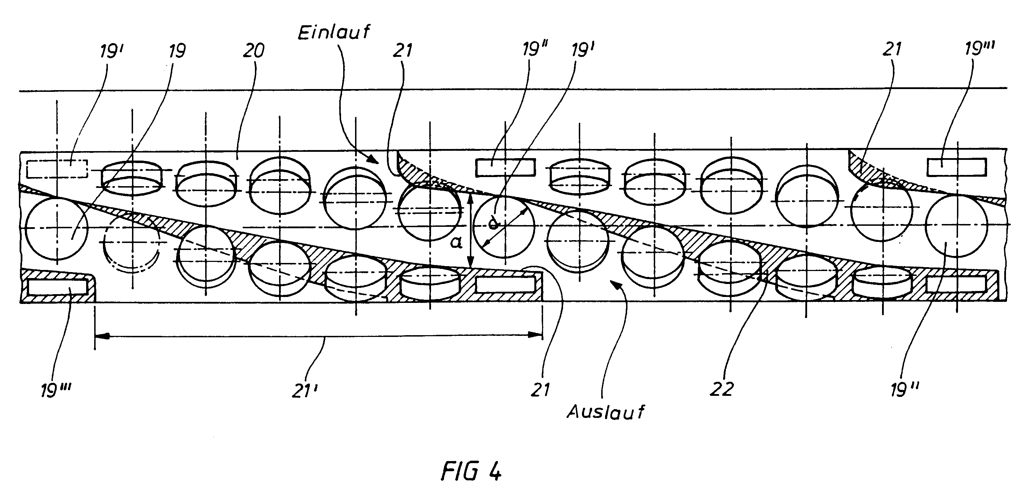

Die mit den Steuerrollen 19,19',19'',19''' des Kreuzstückes 17 in Wirkverbindung kommende Schraubenführungsbahn 21 einer Steuerschiene 20 zeigt Fig.3 und Fig.4.
In Fig. 3 ist allerdings nur ein Teil der auf der Steuerschiene 20 angeordneten Schraubenführungsbahn 21 gezeigt.
Die Steuerschiene 20 mit den schraubenförmig gestalteten Führungsbahnen 21 zeigt Fig. 4. Hier ist die Steuerschiene 20 in der Vorderansicht dargestellt. Mit 21' sind die einzelnen Gangabschnitte einer mehrgängigen Schraubenführungsbahn 21 mit den Flanken 22 bezeichnet.

Wie in Fig. 4 erkennbar, ist der Auslauf der einen Schraubenführungsbahn 21 vom Einlauf der anderen Schraubenführungsbahn 21 überdeckt. Die Steigung der Abschnitte der einzelnen Schraubenführungsbahnen 21 kann z.B. so gewählt sein, daß im Zusammenspiel mit den Steuerrollen 19,19'19'',19''' nach Passieren des jeweils vierten Gangabschnittes 21' das Kreuzstück 17 und damit die Gewindespindel 14 einen Drehwinkel von 360 ° ausgeführt hat. Damit ist der Abstand "e" (Fig. 1) und damit die Teilung zwischen zwei benachbarten Kluppenkörper im Sinne einer Vergrößerung oder Verringerung veränderbar.
Damit die Steuerrollen ungehindert zwischen Flanken 22, insbesondere im Bereich der Überdeckung zwischen dem Auslauf der einen Schraubenführungsbahn 21 und dem Einlauf der anderen Schraubenführungsbahn 21 abrollen können, ist der Abstand "a" im Überdeckungsbereich der Schraubenführungsbahnen 21 größer als der Durchmesser "d" der Steuerrolle 19,19',19'',19'''.

Die in Fig. 4 dargestellte Steuerschiene 20 kann als ein kompakt ausgeführtes Segment ausgebildet sein, das z.B. in einem Grundkörper einschiebbar ist, der auch die Führungsbahn 9 der Spannkluppe trägt. Dabei besteht die Steuerschiene 20 aus einem einzigen Teil, d.h. Schiene 20 und die Schraubenführungsbahn 21 sind im spanabhebenden Verfahren oder im Metallgießverfahren hergestellt.
Denkbar ist auch, daß die Schraubenführungsbahnen 21 aus flexiblen und an die Teilung anpaßbaren auf der Steuerschiene 21 montierbaren Führungsbändern ausgebildet werden können.

### ZEICHNUNGS-LEGENDE

- 1: Spanneinheit
- 2,2': Rollenkörper
- 3: Verbindungsplatte
- 4: Begrenzung
- 5: Lagerbuchse
- 6: Gelenkbolzen
- 7: Zapfen
- 8: Führungsrolle
- 9: Führungsbahn
- 10: Rolle
- 11: Achse
- 12: Gelenkbolzenabschnitt
- 13: Gewindebohrung
- 14: Gewindespindel
- 15: Spindelabschnitt
- 16: Spindelabschnitt
- 17: Kreuzstück
- 18: Arm
- 19,19',19'',19''': Steuerrollen
- 20: Steuerschiene
- 21: Schraubenführungsbahn
- 21': Abschnitte
- 22: Flanke

## Patentansprüche

1. Vorrichtung für eine Spannkluppenanordnung zur stufenlos veränderbaren Teilung für die simultane biaxiale Behandlung von Folienbahnen, mit an beiden Rändern einer Folienbahn angreifenden Klemmteilen, die an mit Gelenkbolzen ausgerüsteten Kluppenkörpern angeordnet sind, wobei jeder Kluppenkörper über mehrere von ihm getragene Rollenanordnungen zur vertikalen und horizontalen Führung an Laufflächen von Führungsschienen abrollt und die Kluppenkörper paarweise zur stufenlosen Teilungsveränderung mit einem mit einer Steuerschiene in Kontakt kommenden Verstellmechanismus verbunden sind, **dadurch gekennzeichnet,**
- daß der Verstellmechanismus aus einer Gewindespindel (14) mit einem ersten mit Rechtsgewinde und einem zweiten mit Linksgewinde versehenen Spindelabschnitt (15,16) besteht,
- daß die Gewindespindel (14) zentrisch zu beiden Seiten der Gewindeabschnitte (15,16) ein Kreuzstück (17) aufweist, das mit um einen Drehwinkel versetzt radial um die Längsachse der Gewindespindel (14) angeordneten Steuerrollen (19,19',19'', 19''') ausgerüstet ist,
- daß jede der Steuerrollen (19,19',19'', 19''') intermittierend mit den außerhalb der Kluppenanordnung angeordneten Steuerschienen (20) in Kontakt steht und
- daß der Verstellmechanismus zwischen den einander benachbarten Kluppenkörpern angeordnet und mit diesen im Gewindeeingriff steht.

2. Vorrichtung nach Anspruch 1, **dadurch gekennzeichnet,** daß jede Spannkluppe über jeden die Kluppe durchgreifenden Gelenkbolzen (6) mit der Gewindespindel (14) in Gewindeeingriff steht.

3. Vorrichtung nach Anspruch 2, **dadurch gekennzeichnet,** daß die Arme (18) des Kreuzstückes (17) um einen Drehwinkel versetzt am Kreuzstück (17) angeordnet sind.

4. Vorrichtung nach Anspruch 3, **dadurch gekennzeichnet,** daß an den freien Enden der Arme (18) die Steuerrollen (19,19',19'',19''') drehbeweglich angeordnet sind.

5. Steuerschiene für Spannkluppen mit stufenlos verstellbarer Teilung, wobei einander benachbarte Spannkluppen über eine Gewindespindel verbunden sind und die Gewindespindel zentrisch ein mit Armen ausgerüstetes Kreuzstück aufweist, das mit um einen Drehwinkel versetzt radial um die Längsachse der Gewindespindel angeordneten Steuerrollen ausgerüstet ist, **gekennzeichnet** nach Anspruch 1 **durch** auf der Steuerschiene (20) vorhandene Gangabschnitte (21') einer mehrgängigen Schraubenführungsbahn (21), mit denen die Steuerrollen (19,19',19'',19''') der Gewindespindel (14) intermittierend in Eingriff stehen.

6. Steuerschienen nach Anspruch 5, **dadurch gekennzeichnet,** daß der Auslauf der einen Schraubenführungsbahn (21) vom Einlauf der anderen Schraubenführungsbahn (21) beabstandet überdeckt ist.

7. Steuerschiene nach Anspruch 5, **dadurch gekennzeichnet,** daß die Gangabschnitte (21') der Schraubenführungsbahnen (21) mit gleichbleibender Schraubensteigung ausgeführt sind.

8. Steuerschiene nach Anspruch 5, **dadurch gekennzeichnet,** daß die Gangabschnitte (21') der Schraubenführungsbahnen (21) mit veränderlicher Schraubensteigung ausgeführt sind.

9. Steuerschiene nach Anspruch 6, **dadurch gekennzeichnet,** daß der Abstand "a" zwischen den Flanken (22) der einander übergreifenden Schraubenführungsbahnen (21) größer als der Durchmesser "d" der Steuerrollen (19,19',19'',19''') ist.

10. Steuerschiene nach Anspruch 5, **dadurch gekennzeichnet,** daß die Schraubenführungsbahnen (21) starr ausgeführt sind.

11. Steuerschiene nach Anspruch 5, **dadurch gekennzeichnet,** daß die Schraubenführungsbahnen (21) aus flexiblen und verstellbaren Führungsbändern ausgebildet sind.

12. Steuerschiene nach Anspruch 5 bis 9, **gekennzeichnet durch** als ein kompakt ausgeführtes Segment, das mit einem die Führungsbahnen (9) aufnehmenden Bahnträger verbunden ist.

## Claims

1. Device for a tenter clip arrangement for continuously variable separation, for the simultaneous biaxial processing of foil webs, comprising clamping parts which engage on both edges of a foil web and which are disposed on clip members provided with hinge pins, wherein each clip member rolls, by means of a plurality of roller arrangements supported thereon for the vertical and horizontal guiding thereof, on running surfaces of guide rails and the clip members are connected in pairs for the continuous adjustment of the separation to a setting mechanism which comes into contact with a control rail, characterised in that the setting mechanism consists of a threaded spindle (14), comprising first and second spindle sections (15, 16), the first section being provided with the righthand thread and the second with a lefthand thread; in that the threaded spindle (14) comprises a cross piece (17) which is central to both sides of the threaded sections (15, 16) and is provided with control rollers (19, 19', 19'', 19''') which are arranged, offset by a rotational angle, radially about the longitudinal axis of the threaded spindle (14); in that each of the control rollers (19, 19', 19'', 19''') is intermittently in contact with the control rails (20) which are disposed outside the clip arrangement; and in that the setting mechanism is disposed between the clip members and is in threaded connection therewith.

2. Device according to Claim 1, characterised in that each tenter clip is in threaded engagement with the threaded spindle (14) via each hinge pin (6) engaging through the tenter clip.

3. Device according to Claim 2, characterised in that the arms (18) of the cross piece (17) are disposed on the cross piece (17) offset by a rotational angle.

4. Device according to Claim 3, characterised in that at the free ends of the arms (18) the control rollers (19, 19', 19'', 19''') are disposed in a rotationally movable manner.

5. Control rail for tenter clips with continuously variable separation, wherein tenter clips which are adjacent one another are connected via a threaded spindle and the threaded spindle comprises, centrally, a crosspiece provided with arms, which is provided with control rollers which are disposed, offset by a rotational angle, radially about the longitudinal axis of the threaded spindle, characterised according to Claim 1 by passage sections (21'), provided on the control rail (20), of a multiple-passage screw guideway (21) with which the control rollers (19, 19', 19'', 19''') of the threaded spindle (14) are intermittently in engagement.

6. Control rail according to Claim 5, characterised in that the outlet of one screw guideway (21) is overlapped at a distance by the inlet of the other screw guideway (21).

7. Control rail according to Claim 5, characterised in that the passage sections (21') of the screw guideways (21) are produced with a pitch which remains the same.

8. Control rail according to Claim 5, characterised in that the passage sections (21') of the screw guideway (21) are produced with variable pitches.

9. Control rail according to Claim 6, characterised in that the distance "a" between the flanks (22) of the screw guideway (21) which overlap one another is larger than the diameter "d" of the control rollers (19, 19', 19'', 19''').

10. Control rail according to Claim 5, characterised in that the screw guideways (21) are formed so as to be rigid.

11. Control rail according to Claim 5, characterised in that the screw guideways (12) are formed of flexible and adjustable guide bands.

12. Control rail according to Claims 5 to 9, characterised by a compactly produced section, which is connected to a strip support accommodating the guideways (9).

## Revendications

1. Dispositif pour un agencement ou une chaîne de griffes à pinces de serrage, pour faire varier en continu la distance entre deux pinces, pour le traitement biaxial simultané de bandes continues, le dispositif comportant sur les deux bords d'une bande des pièces de serrage appliquées qui sont disposées sur des corps de pinces équipés d'axes d'articulation, chaque corps de pince roulant sur plusieurs agencements de galets portés par ce corps pour le guidage vertical et horizontal sur des surfaces de roulement de rails ou profilés de guidage et les corps de pinces étant reliés par paires pour modifier en continu le pas ou la distance entre deux pinces en comportant un mécanisme de réglage venant en contact avec un rail de commande directionnelle, dispositif caractérisé
- en ce que le mécanisme de réglage consiste en une tige filetée (14) présentant un premier tronçon (15) de tige muni d'un filetage à droite et un second tronçon (16) de tige muni d'un filetage à gauche,
- en ce que la tige filetée (14) présente, centralement par rapport aux deux côtés des tronçons (15, 16) de tige filetée, une pièce cruciforme (17) comportant des galets directionnels (19, 19', 19'', 19''') montée, avec un décalage angulaire, radialement par rapport à l'axe longitudinal de la tige filetée (14),
- en ce que chacun des galets directionnels (19, 19', 19'', 19''') est en contact intermittent avec les rails directionnels (20) montés à l'extérieur de la chaîne des pinces, et
- en ce que le mécanisme de réglage est disposé entre les corps de pinces voisins les uns des autres et est en prise d'engrènement avec ces corps.

2. Dispositif selon la revendication 1, caractérisé en ce que chaque pince de serrage est, par l'intermédiaire de l'axe respectif d'articulation (6) traversant la pince, en contact de prise d'engrènement avec la tige filetée (14).

3. Dispositif selon la revendication 2, caractérisé en ce que les bras (18) de la pièce cruciforme (17) sont disposés, en étant angulairement décalés, sur la pièce cruciforme (17).

4. Dispositif selon la revendication 3, caractérisé en ce que les galets directionnels (19, 19', 19'', 19''') sont montés mobiles en rotation sur les extrémités libres des bras (18).

5. Profilé ou rail directionnel pour guider des pinces de serrage présentant une variation en continu du pas ou de la distance séparant deux pinces, dans le cas duquel les pinces de serrage, voisines l'une de l'autre, sont reliées par l'intermédiaire d'une tige filetée et la tige filetée présente en position centrale une pièce cruciforme équipée de bras, pièce comportant des galets directionnels montés en présentant un décalage angulaire radialement par rapport à l'axe longitudinal de la tige filetée,
rail caractérisé selon la revendication 1 par la présence, sur les rails directionnels (20), de pas élémentaires (21') faisant partie d'une piste hélicoïdale (21) de guidage à plusieurs pas, avec lesquels les galets directionnels (19, 19', 19'', 19''') de la tige filetée(14) sont en prise de manière intermittente.

6. Rail directionnel selon la revendication 5, caractérisé en ce que la sortie d'une piste hélicoïdale (21) de guidage est recouverte a distance par l'entrée de l'autre piste hélicoïdale (21) de guidage.

7. Rail directionnel selon la revendication 5, caractérisé en ce que les pas élémentaires (21') de piste hélicoïdale (21) de guidage sont réalisés à pas constant.

8. Rail directionnel selon la revendication 5, caractérisé en ce que les pas élémentaires (21') des pistes hélicoïdales (21) de guidage sont réalisés avec des pas différents ou variables.

9. Rail directionnel selon la revendication 6, caractérisé en ce que la distance "a" séparant les flancs (22) des pistes hélicoïdales (21) successives de guidage est plus grande que le diamètre "d" des galets directionnels (19, 19', 19'', 19''').

10. Rail directionnel selon la revendication 5, caractérisé en ce que les pistes hélicoïdales (21) sont fixes et rigides.

11. Rail directionnel selon la revendication 5, caractérisé en ce que les pistes hélicoïdales (21) de guidage sont formées de bandes flexibles et réglables de guidage.

12. Rail directionnel selon les revendications 5 à 9, caractérisé en ce qu'il comporte un segment compact qui est relié à un support de piste logeant les pistes (9) de guidage.
